# FASCICULE DE BREVET EUROPEEN

(11) **EP 4 474 924 B1**
(45) Date de publication et mention de la délivrance du brevet: **25.02.2026**
(21) Numéro de dépôt: 23178514.8
(22) Date de dépôt: 09.06.2023
(51) Int. Cl.: G04D 7/00

(54) **DISPOSITIF DE MESURE DU DEGRÉ D'HUMIDITÉ DANS LE VOLUME INTERNE D'UNE BOITE DE MONTRE**
VORRICHTUNG ZUR MESSUNG DES FEUCHTIGKEITSGRADES IM INNEREN VOLUMEN EINES ARMBANDUHRGEHÄUSES
DEVICE FOR MEASURING THE DEGREE OF HUMIDITY IN THE INTERNAL VOLUME OF A WATCH CASE

(43) Date de publication de la demande: 11.12.2024
(73) Titulaire: The Swatch Group Research and Development Ltd, 2074 Marin (CH)
(72) Inventeur: FARAH, Hicham, 2605 Sonceboz-Sombeval (CH); TORTORA, Pierpasquale, 2000 Neuchâtel (CH)
(74) Mandataire: ICB SA

(56) Documents cités:
- EP-A1- 3 985 455
- JP-A- 2008 164 576
- KEBABIAN P L ET AL: "WATER VAPOUR SENSING USING POLARIZATION SELECTION OF A ZEEMAN-SPLITARGON DISCHARGE LAMP EMISSION LINE", MEASUREMENT SCIENCE AND TECHNOLOGY, IOP, BRISTOL, GB, vol. 9, no. 11, November 1998 (1998-11-01), pages 1793 - 1796, XP000876079, ISSN: 0957-0233, DOI: 10.1088/0957-0233/9/11/001

## Description

### Domaine technique de l'invention

L'invention relève des dispositifs de mesures de paramètres appliqués au domaine de l'horlogerie et notamment des dispositifs de mesure du degré d'humidité dans le volume interne d'une boite de montre.

Plus particulièrement, l'invention concerne un dispositif de mesure du degré d'humidité dans le volume interne d'une boite de montre.

### Arrière-plan technologique

De nos jours, toutes les montres sont conçues pour être étanches à l'eau, c'est-à-dire pour résister à la pénétration d'eau sous forme liquide au sein du volume interne de leur boite. Cette propriété permet d'utiliser une montre, suivant son niveau d'étanchéité, dans des environnements humides ou de l'immerger. Par exemple, les montres de plongée sont conçues pour résister à la pression générée par l'eau sur les parois de leur boite, au minimum à 100 m de profondeur.

Pour garantir leur étanchéité, les montres sont munies de joints d'étanchéité positionnés dans les interfaces d'assemblage de certains composants de leur boite, telles que la glace, la lunette, le fond de la montre, la couronne et les boutons poussoir.

Cependant, les propriétés mécaniques des joints évoluent dans le temps et selon les conditions climatiques de l'environnement dans lequel les montres sont utilisées, ce qui peut entraîner une détérioration de leur étanchéité. Les montres risquent alors d'être perméables à l'eau et de la condensation peut apparaitre dans leur volume interne, sur la surface de leurs composants, ce qui peut occasionner l'oxydation des composants métalliques ou la dégradation des composants polymères.

Par ailleurs, les joints et/ou certaines pièces d'habillage réalisés en matériaux polymères peuvent être sujets à la permétaion, c'est-à-dire qu'ils laissent passer une certaine quantité de vapeur d'eau présente dans l'environnement dans lequel la montre se trouve afin qu'il y ait équilibre entre l'intérieur et l'extérieur de la montre. Cet équilibre peut être atteint en quelques heures ou en quelques semaine selon la qualité de la construction de la montre et des joints et selon l'environnement. Dans ce cas, il peut y avoir plus ou moins de vapeur d'eau présente dans la montre, et en fonction du porté et des différences de température extérieure dans le temps.

Afin de limiter les risques de perte d'étanchéité ou d'augmentation trop importante de la perméation de matériaux polymères utilisés, il est recommandé de faire régulièrement un service de maintenance de sa montre pour lequel il est nécessaire de l'ouvrir. Cette ouverture est relativement onéreuse dans la mesure où elle fait intervenir un horloger et implique un changement systématique de l'ensemble des joints.

Des dispositifs de mesure du degré d'humidité ont donc été développés et intégrés à l'intérieur des boites de montres afin de pouvoir mesurer le degré d'humidité et détecter une anomalie liée à la présence importante d'eau ou de vapeur d'eau sans devoir ouvrir ces dernières.

Il existe par exemple des dispositifs de mesure se présentant sous la forme d'un module électronique de faibles dimensions apte à mesurer et enregistrer des valeurs de différents paramètres environnementaux, dont l'humidité relative. Un tel module électronique est apte à mesurer, via un capteur dédié, le degré d'humidité à l'intérieur de la boite de montre. Il est ensuite possible de transmettre les valeurs d'humidité relatives mesurées à une station d'accueil de la montre par voie sans fil.

Toutefois, un inconvénient de ces dispositifs de mesure est qu'ils nécessitent une source d'alimentation en énergie, telle qu'une batterie ou une pile. Ces dispositifs sont donc très peu adaptés à des montres mécaniques ou à des montres de faibles dimensions. De plus, pour des montres électroniques, ces dispositifs peuvent pénaliser l'autonomie ou nécessiter de prendre une pile ou une batterie rechargeable de plus grande capacité, ce qui peut ne pas être compatible avec le volume disponible à l'intérieur des boites de montre.
EP 3 985 455 A1 divulgue un dispositif de mesure du degré d'humidité dans le volume interne d'une boite d'une montre à partir de l'absorption d'un faisceau lumineux, où l'émetteur et le capteur optiques se trouvent à l'extérieur de la montre.

Il y a lieu de noter que la notion d'étanchéité dans le présent texte. fait référence de façon générale à l'étanchéité à l'eau, sous forme liquide ou sous forme de vapeur.

Par ailleurs, les termes « degré d'humidité » désignent le taux d'humidité relative de l'air.

### Résumé de l'invention

L'invention résout les inconvénients précités en proposant, à cet effet, un dispositif de mesure du degré d'humidité dans le volume interne d'une boite de montre comportant :
- une montre comprenant une boite dans laquelle est logée un système optique, ledit système optique comportant un émetteur d'un faisceau lumineux, une cellule à réflexion multiple que le faisceau lumineux est destiné à traverser, et un récepteur du faisceau lumineux destiné à recevoir ledit faisceau une fois qu'il a traversé la cellule à réflexion multiple ;
- un module de gestion externe à ladite boite, comportant une unité de traitement configurée pour communiquer avec le système optique et pour traiter des données transmises par ce dernier afin de déterminer le degré d'humidité présent dans le volume interne de la boite à partir de l'absorption du faisceau lumineux par la vapeur d'eau susceptible d'être présente dans ledit volume interne de la boite.

Dans des modes particuliers de réalisation, l'invention peut comporter en outre l'une ou plusieurs des caractéristiques suivantes.

Dans des modes particuliers de réalisation, l'unité de traitement est configurée pour piloter l'émetteur afin qu'il émette ou arrête l'émission d'un faisceau lumineux.

Dans des modes particuliers de réalisation, l'émetteur est constitué par un laser de type à cavité verticale émettant par la surface ou par un laser de type à cavité externe verticale émettant par la surface.

Dans des modes particuliers de réalisation, le module de gestion comprend une source d'alimentation configurée pour alimenter en énergie l'émetteur et le récepteur.

Dans des modes particuliers de réalisation, la source d'alimentation est intégrée dans le volume interne de la montre.

### Brève description des figures

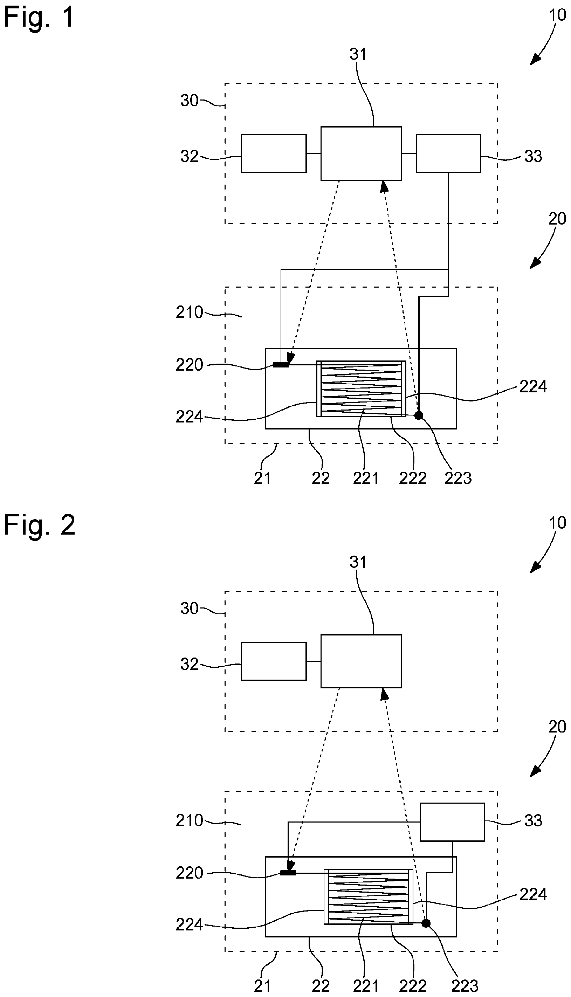

D'autres caractéristiques et avantages de l'invention apparaîtront à la lecture de la description détaillée suivante donnée à titre d'exemple nullement limitatif, en référence aux figures 1 et 2 qui représentent schématiquement un dispositif de mesure du degré d'humidité dans le volume interne d'une boite de montre selon la présente invention, dans des exemples de réalisation.

### Description détaillée de l'invention

Les figures 1 et 2 représentent schématiquement un dispositif de mesure 10 du degré d'humidité dans le volume interne (210) d'une boite de montre par spectroscopie d'absorption à cavité optique. Le volume interne de la boite est défini, de façon connue en soi, par une glace, un fond et une carrure, et loge un mouvement horloger.

Le dispositif de mesure 10 selon la présente invention comprend une montre 20, un système optique 22 logé dans la boite 21 de ladite montre 20, et un module de gestion 30 externe à ladite boite 21. Le module de gestion 30 est dit « externe » à la boite 21 dans le sens où il n'est pas logé dans le volume interne 210 de cette dernière.

Le module de gestion 30 comprend une unité de traitement 31 configurée pour communiquer avec le système optique 22 et traiter des données transmises par cette dernière. Le système optique 22 et le module de gestion 30 sont aptes à communiquer préférentiellement par voie sans fil.

Avantageusement, le module de gestion 30 peut comporter également des organes d'affichage 32 configurés pour afficher une représentation des données traitées, tel que décrit plus en détail dans la suite du texte.

Le système optique 22 est fixé, par exemple, sur la carrure, sur un cadran de la montre 20, ou sur une structure du mouvement horloger tel qu'une platine ou un pont. Comme visible sur la représentation schématique des figures 1 et 2, le système optique 22 comporte un émetteur 220 d'un faisceau lumineux 221, une cellule à réflexion multiple, aussi dénommé *multi-pass cell* ou *MPC* en langue anglaise, que le faisceau lumineux 221 est destiné à traverser, et un récepteur 223 du faisceau lumineux 221 destiné à recevoir ledit faisceau une fois qu'il a traversé la cellule à réflexion multiple 222.

Il y a lieu de noter qu'un tel système optique 22 est configuré de manière à ce que le faisceau lumineux 221 circule entre l'émetteur 220 et le récepteur 223 sans être guidé par un guide optique, tel qu'une fibre optique ou un guide d'ondes diélectrique, c'est-à-dire sans être confiné dans un milieu différent de celui du volume interne 210 de ladite boite 21.

Lors de sa propagation dans le milieu du volume interne 210 de la montre 20, en l'espèce de l'air, le faisceau lumineux 221 interagit avec ledit milieu, ce qui engendre une modification des propriétés dudit faisceau.

En particulier, dans la présente invention, le dispositif vise à mesurer le degré d'humidité présent dans le volume interne 210 de la boite 21 de la montre 20 à partir de l'évaluation d'une modification de l'absorption du faisceau lumineux 221 par la vapeur d'eau susceptible d'être présente dans le volume interne 210 de la boite 21. On note que l'on mesure l'absorbance et, connaissant le coefficient d'absorption de la molécule d'eau, en particulier de la vapeur d'eau, on peut en déduire la concentration d'eau présente dans l'air du volume interne 210.

L'émetteur 220 comprend une source de lumière collimatée apte à émettre un faisceau lumineux 221 à travers la cellule à réflexion multiple 222 jusqu'au récepteur 223. A titre d'exemple, l'émetteur 220 est un laser de type à cavité externe émettant par la surface, aussi connu sous la dénomination *External cavity diode lasers* ou *ECDL* en langue anglaise, ou par un laser de type à cavité verticale émettant par la surface, aussi connu sous la dénomination *Vertical-cavity surface-emitting laser* ou *VCSEL.*

Avantageusement, l'émetteur 220 est configuré de sorte à émettre un faisceau lumineux 221 dont une longueur d'onde correspond à l'une des longueurs d'ondes absorbées par la vapeur d'eau, en particulier à une longueur d'onde égale à 968.3 nm, 1388 nm, 2741.41 nm, 2662.48 nm ou 6270.77 nm.

Par ailleurs, l'émetteur 220 est configuré pour communiquer avec l'unité de traitement 31. En particulier, l'unité de traitement 31 est configurée pour transmettre des consignes à l'émetteur 220 pour émettre le faisceau lumineux 221 ou arrêter son émission.

La cellule à réflexion multiple 222 comporte, comme le montre schématiquement les figures 1 et 2, au moins deux éléments réfléchissant 224, par exemple réalisés en oxyde d'aluminium ou encore en dioxyde de titane, présentant une réflectivité à la longueur d'onde du faisceau lumineux 221. Grâce à la disposition de l'émetteur 220 et/ou des éléments réfléchissant 224, le faisceau lumineux 221 est reflété plusieurs fois par l'un et l'autre des éléments réfléchissant 224. Ainsi, le trajet optique du faisceau lumineux 221 est donc considérablement augmenté, ce qui permet d'accroitre l'absorption dudit faisceau lumineux 221 par la vapeur d'eau susceptible d'être présente dans le volume et ainsi d'améliorer la sensibilité de la mesure. En effet, la mesure du degré d'humidité réalisée par le dispositif de mesure 10 est d'autant plus précise que la longueur du trajet optique est importante. A titre d'exemple, la cellule à réflexion multiple 222 peut être configurée de sorte que le trajet optique soit compris entre quelques centimètres, par exemple dix centimètres, et quelques mètres, par exemple dix mètres.

Le récepteur 223 comprend un capteur optique de lumière comportant une photodiode. Ce récepteur 223 est aussi pourvu d'un convertisseur analogique-numérique permettant de convertir une grandeur analogique relative à l'intensité du faisceau lumineux 221 en une donnée exploitable par l'unité de traitement 31, telle qu'une valeur numérique. On note que le récepteur 223 peut comporter plusieurs capteurs optiques, ce qui permet d'amplifier la différence des signaux provenant de ces capteurs optiques afin de réduire l'effet du bruit d'intensité relatif du faisceau lumineux 221, ou d'optimiser au mieux la gamme dynamique du convertisseur analogique-numérique. Il est également envisageable de placer un filtre optique passe bande devant le récepteur 223 de manière à ce qu'il soit sensible uniquement à la longueur d'onde émise par l'émetteur 220.

Le récepteur 223 est configuré pour communiquer avec l'unité de traitement 31 de sorte à lui transmettre les données représentatives de l'intensité du faisceau lumineux 221 émis par l'émetteur 220.

L'unité de traitement 31 peut être un circuit intégré qui comprend des ressources matérielles et logicielles en particulier au moins un processeur coopérant avec des éléments de mémoire. Cette unité de traitement 31 est apte à exécuter des instructions pour la mise en œuvre d'un programme d'ordinateur afin de contribuer à la détermination de la mesure du degré d'humidité dans le volume interne 210 de la boite 21 de la montre 20.

Plus précisément, l'unité de traitement 31 est apte à piloter l'émetteur 220 comme décrit précédemment et est configurée pour évaluer l'absorption dudit faisceau lumineux 221 par la vapeur d'eau susceptible d'être présente dans ledit volume interne 210 de la boite 21. En particulier l'unité de traitement 31 est apte à effectuer des opérations de traitement du signal au travers d'opérations de modulation de signal et de détection synchrone. L'unité de traitement 31 comprend par exemple dans ses éléments de mémoire une ou plusieurs tables de correspondance entre des valeurs d'intensité de faisceau lumineux 221 et/ou des coefficients d'absorption dudit faisceau lumineux 221 par la vapeur d'eau, avec des valeurs de degré d'humidité associées aux valeurs d'intensité du faisceau lumineux 221 et/ou aux coefficients d'absorption et ce, afin de déterminer le degré d'humidité dans le volume interne 210 de la boite 21.

Comme le montre la figure 1, le module de gestion 30 peut comprendre une source d'alimentation 33 configurée pour alimenter en énergie le système optique, et en particulier l'émetteur 220 et le récepteur 223, par exemple par le biais d'éléments d'alimentation filaires ou sans fil. A titre d'exemple, les éléments d'alimentation filaires sont constitués par un connecteur ou par une prise, respectivement destinés à être accouplés à une prise ou à un connecteur agencé sur la boite 21 de montre 20. Par ailleurs, les éléments d'alimentation sans fil peuvent comprendre des éléments d'induction électromagnétique.

Les organes d'affichage 32 peuvent être analogiques ou numériques. En particulier, ils sont avantageusement aptes à afficher plusieurs signaux visuels distincts représentatifs de la valeur du degré d'humidité déterminée par l'unité de traitement 31. A titre d'exemple, ils peuvent être constitués par un écran d'affichage, une échelle lumineuse, une aiguille adaptée à parcourir une échelle de valeur agencée en arc de cercle, etc.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, la source d'alimentation 33 peut être intégrée dans le volume interne 210 de la montre 20 et non dans le module de gestion 30, comme le montre la figure 2. Une telle source d'alimentation 33 peut alors être formée par une pile ou une batterie rechargeable de dimensions relativement réduites. Cet exemple de réalisation de l'invention est préférentiellement applicable pour les montres électroniques, la pile ou la batterie rechargeable constituant la source d'alimentation 33 pouvant être la pile ou la batterie rechargeable d'alimentation du mouvement horloger.

Aussi, le module de gestion 30 peut être adapté à communiquer des informations représentatives des données traitées par l'unité de traitement 31 à un appareil électronique, tel qu'un téléphone intelligent ou à une tablette électronique, apte à afficher une représentation des données traitées.

## Revendications

1. Dispositif de mesure (10) du degré d'humidité dans le volume interne (210) d'une boite (21) de montre (20) **caractérisé en ce qu'**il comporte :
- une montre (20) comprenant une boite (21) dans laquelle est logée un système optique (22), ledit système optique (22) comportant un émetteur (220) d'un faisceau lumineux (221), une cellule à réflexion multiple (222) que le faisceau lumineux (221) est destiné à traverser, et un récepteur (223) du faisceau lumineux (221) destiné à recevoir ledit faisceau une fois qu'il a traversé la cellule à réflexion multiple (222) ;
- un module de gestion (30) externe à ladite boite (21), comportant une unité de traitement (31) configurée pour communiquer avec le système optique (22) et pour traiter des données transmises par ce dernier afin de déterminer le degré d'humidité présent dans le volume interne (210) de la boite (21) à partir de l'absorption du faisceau lumineux (221) par la vapeur d'eau susceptible d'être présente dans ledit volume interne (210) de la boite (21).

2. Dispositif de mesure (10) selon la revendication 1, dans lequel l'unité de traitement (31) est configurée pour piloter l'émetteur (220) afin qu'il émette ou arrête l'émission d'un faisceau lumineux (221).

3. Dispositif de mesure (10) selon la revendication 1 ou 2, dans lequel l'émetteur (220) est constitué par un laser de type à cavité verticale émettant par la surface ou par un laser de type à cavité externe émettant par la surface.

4. Dispositif de mesure (10) selon l'une des revendications 1 à 3, dans lequel le module de gestion (30) comprend une source d'alimentation (33) configurée pour alimenter en énergie l'émetteur (220) et le récepteur (223).

5. Dispositif de mesure (10) selon l'une des revendications 1 à 4, dans lequel la source d'alimentation (33) est intégrée dans le volume interne (210) de la montre (20).

## Patentansprüche

1. Feuchtemessvorrichtung (10) zum Messen des Feuchtigkeitsgrades im inneren Volumen (210) eines Uhrgehäuses (21) einer Uhr (20), **dadurch gekennzeichnet, dass** sie Folgendes umfasst:
- eine Uhr (20) umfassend ein Uhrgehäuse (21), in welchem ein optisches System (22) angeordnet ist, wobei das optische System (22) einen Sender (220) eines Lichtbündels (221), eine Mehrfachreflexionszelle (222), die dazu bestimmt ist, von dem Lichtbündel (221) durchquert zu werden, und einen Empfänger (223) des Lichtbündels (221) umfasst, der dazu bestimmt ist, das Lichtbündel zu empfangen, nachdem es die Mehrfachreflexionszelle (222) durchquert hat;
- ein außerhalb des Uhrgehäuses (21) angeordnetes Steuermodul (30), umfassend eine Verarbeitungseinheit (31), die dafür konfiguriert ist, mit dem optischen System (22) zu kommunizieren und von diesem übertragene Daten zu verarbeiten, um den Feuchtigkeitsgrad im inneren Volumen (210) des Uhrgehäuses (21) anhand der Absorption des Lichtbündels (221) durch den Wasserdampf zu bestimmen, der in dem inneren Volumen (210) des Uhrgehäuses (21) vorhanden sein kann.

2. Feuchtemessvorrichtung (10) nach Anspruch 1, wobei die Verarbeitungseinheit (31) dazu konfiguriert ist, den Sender (220) so anzusteuern, dass dieser ein Lichtbündel (221) aussendet oder die Aussendung des Lichtbündels (221) stoppt.

3. Feuchtemessvorrichtung (10) nach Anspruch 1 oder 2, wobei der Sender (220) durch einen Vertikalkavitäts-Oberflächenemitter-Laser oder durch einen Externkavitäts-Oberflächenemitter-Laser gebildet ist.

4. Feuchtemessvorrichtung (10) nach einem der Ansprüche 1 bis 3, wobei das Steuermodul (30) eine Energieversorgungsquelle (33) umfasst, die dazu konfiguriert ist, den Sender (220) und den Empfänger (223) mit Energie zu versorgen.

5. Feuchtemessvorrichtung (10) nach einem der Ansprüche 1 bis 4, wobei die Energieversorgungsquelle (33) in das innere Volumen (210) der Uhr (20) integriert ist.

## Claims

1. Measuring device (10) for measuring the humidity in the internal volume (210) of a case (21) of a watch (20), **characterised in that** the device includes:
- a watch (20) comprising a case (21) housing an optical system (22), said optical system (22) including a transmitter (220) transmitting a light beam (221), a multi-pass cell (222) through which the light beam (221) is intended to pass, and a receiver (223) intended to receive the light beam (221) once it has passed through the multi-pass cell (222);
- a management module (30) external to said case (21), including a processing unit (31) configured to communicate with the optical system (22) and to process data transmitted thereby in order to determine the humidity present in the internal volume (210) of the case (21) on the basis of the absorption of the light beam (221) by the water vapour that may be present in said internal volume (210) of the case (21).

2. Measuring device (10) according to claim 1, in which the processing unit (31) is configured to control the transmitter (220) so that it transmits or stops the transmission of a light beam (221).

3. Measuring device (10) according to claim 1 or 2, wherein the transmitter (220) is a vertical-cavity surface-emitting laser or an external-cavity surface-emitting laser.

4. Measuring device (10) according to one of claims 1 to 3, wherein the management module (30) comprises a power source (33) configured to power the transmitter (220) and the receiver (223).

5. Measuring device (10) according to one of claims 1 to 4, wherein the power source (33) is integrated into the internal volume (210) of the watch (20).
